# EUROPEAN PATENT APPLICATION

(11) **EP 4 006 337 A1**
(43) Date of publication of application: **01.06.2022**
(21) Application number: 20210175.4
(22) Date of filing: 27.11.2020
(51) Int. Cl.: F03D 7/04

(54) **MOVABLE PARK CONTROL SYSTEM**

(71) Applicant: Siemens Gamesa Renewable Energy A/S, 7330 Brande (DK)
(72) Inventor: Glintborg, Jesper, 7500 Holstebro (DK); Guo, Yu, 8800 Viborg (DK); Hjul, Ivan Schultz, 6800 Varde (DK); Poulsen, Jan Oestergaard, 8600 Silkeborg (DK); Stoettrup, Michael, 7400 Herning (DK)
(74) Representative: Aspacher, Karl-Georg

(57) **Abstract**

It is described an arrangement (110) for controlling a wind park (100) having plural wind turbines (101), the arrangement comprising: a first wind turbine (101a) having a first controller (103a) that is configured to control the first wind turbine (101a) and further configured to provide at least one wind park control function (105a); at least one second wind turbine (101b) having a second controller (103b) that is configured to control the second wind turbine and further configured to provide the at least one wind park control function (105b); and a switching system (107) configured to selectively provide the at least one wind park control function by the first controller (103a) or by the second controller (103b) .

## Description

### Field of invention

The present invention relates to an arrangement and to a method of controlling a wind park having plural wind turbines. Further, the present invention relates to a wind park comprising the arrangement and being adapted to perform the method.

### Art Background

US 9 845 789 B2 provides a wind turbine system comprising a central wind park controller and plural wind turbines. The wind turbines can also provide to monitor and control others when the connection to the central controller is lost.

EP 2 949 922 B1 discloses a distributed control of a wind park, wherein each wind turbine performs the control based on a PCC measurement and based on references.

In a conventional wind park comprising plural wind turbines, a wind park controller is typically a centralized component in the wind park. The wind park controller may be prone to a failure or fault situation. For example, in case of fire or a water fault that causes the park controller to fail, the control for the entire wind park would be lost and the whole wind park would be out of control.

A conventional method for providing a solution for such a scenario is to provide one or two additional park controller servers on the site of the original park controller as a backup. When one of the control servers fails, another one can take over so that operation of the wind park can be continued. Such backup hardware servers may typically be placed very close to the original park controller. Thus, these backup servers are geographically or physically very close to the original server acting as a wind park controller. However, in this case, water or fire or other risk factors may cause to destroy all of them. Furthermore, there is also a price for the extra control servers, including price for hardware, rack space, housing on the site, continuous maintenance costs, etc. Furthermore, there is extra costs for the service, for example it is expected 5 years of server hardware lifetime (including service).

Thus, the conventional system provides limited redundancy and increased costs. When the wind park becomes bigger, the shutdown of the entire park due to a park control failure has higher costs when the wind park controller fails.

Thus, there may be a need for an arrangement and a corresponding method of controlling a wind park having plural wind turbines which provides a reliable and safe operation and provides in particular increased flexibility.

### Summary of the Invention

This need may be met by the subject matter according to the independent claims. Advantageous embodiments of the present invention are described by the dependent claims.

According to an embodiment of the present invention, a movable park control system is provided in the sense that the park control functionality may be switchable to one or the other wind turbine in the wind park. Therefore, in failure of one of the controllers associated with one of the wind turbines, park control may be switched to another controller of another wind turbine of the wind park.

According to an embodiment of the present invention it is provided an arrangement for controlling a wind park having plural wind turbines, the arrangement comprising: a first wind turbine having a first controller that is configured to control the first wind turbine and further configured to provide at least one wind park control function; at least one second wind turbine having a second controller that is configured to control the second wind turbine and further configured to provide the at least one wind park control function; and a switching system configured to selectively provide the at least one wind park control function by the first controller or by the second controller.

Any place in this document where wind power is mentioned could be replaced with just "power" which could be any of the following, but not limited to, wind power, water power, wave power, solar power, battery power (already stored energy) etc.

The arrangement may comprise plural controllers which conventionally serve to control the individual wind turbines. Among the plural controllers are the first controller and the second controller. All the controllers including the first controller and the second controller may be implemented in hardware and/or software. The first controller as well as the second controller may be part of the respective wind turbine and may in particular be installed within a nacelle or within a wind turbine tower of the respective wind turbine or outside of nacelle or tower. The controllers may be installed in relation to any part of the turbine, e.g. could be based below tower, at or in the hub, at or in a rotor blade etc.. Thus, neither the first controller nor the second controller is installed at a particular control site (apart from the wind turbines) in which conventionally a wind park controller was installed or located.

The first controller is configured to control components of the first wind turbine, such as to control for example a yawing system, a pitching system, a cooling system, a converter system, a generator and so on. Thus, the first controller is capable to provide respective control signals to the different components of the first wind turbine in order to operate the wind turbine for example according to a normal operation, for example for voltage control, for reactive power control, active power control and so on. The same holds for the second controller applicable to the second wind turbine.

Additionally, however, the first controller as well as the second controller (and potentially all controllers of all wind turbines) is configured to provide the at least one wind park control function. The wind park control function is a function related to controlling the entire wind park. Thus, the wind park control function includes to control at least one, in particular all other wind turbines in the wind park regarding a particular control functionality. The wind park control function may for example comprise to send one or more reference values to the plural other wind turbines. Thereby, the reference values may also be calculated by the respective first controller or the second controller and may then be provided via a communication network to the other wind turbines. The at least one wind park control function may be one or all functions conventionally executed or performed by a conventional wind park controller. Thus, the wind park control function may not relate to controlling the components of the own wind turbine for which the respective first controller or second controller is a part of, but may relate to controlling other wind turbines of the wind park. The first controller and the second controller may be constructed and designed in a substantially similar or same manner. The at least one wind park control function may for example be executed by running particular wind park related software which is executing on the first controller or the second controller, respectively.

The switching system may allow to employ the first controller or the second controller for providing the wind park control function, for example depending on which of the first controller and the second controller is operable or in dependence of other factors as described below. Thereby, the arrangement or in particular the switching system may also be capable for testing whether the first controller or the second controller is operable and required communication capability to communicate control signals to the plural wind turbines is functional. The switching system may partly be implemented in software and/or hardware.

The switching system may be configured, in particular in case of a failure of the first (or second) controller, to select a second (or a first) controller of a second (or first) wind turbine among the plural wind turbines of the wind park and then to switch to the second controller. The selection may be based on at least one criterion, e.g. including CPU power, IP, location, etc.

In general, the switching system may be configured, in particular in case of a failure of a active controller currently providing the wind park control function, to select another controller of another wind turbine among the plural wind turbines of the wind park and then to switch to the other controller to provide the wind park control function When the first controller as well as the second controller are configured to provide the at least one wind park control function, a reliable operation of the entire wind park may be ensured also in case of failure of one of the first controller or the second controller, since the still functional controller may take the role of providing the wind park control function in case the other controller is failed. Thereby, a continuous operation of the wind park may be ensured in a reliable manner.

According to embodiments of the present invention, the wind park control is first established in a first wind turbine and is then moved to another second wind turbine (when the second controller is working properly) in case of a failure in the first controller.

According to an embodiment of the present invention, each of the plural wind turbines has a respective controller that is configured to control the respective wind turbine and further configured to provide the at least one wind park control function.

According to an embodiment of the present invention, not necessarily all turbines have this capability of providing the wind park control function. It could be that only a certain percentage of the turbines have this capability. But of cause the higher the percentage the more fail safe.

When each of the plural wind turbines has a respective controller that is configured to control the respective wind turbine and further configured to provide the at least one wind park control function, a still higher redundancy is provided, further improving the reliability for ensuring continuous operation of the wind farm also in case of a failure in one of the controllers. Thereby, the switching system may be configured to selectively provide the at least one wind park control function by anyone of the respective controllers of any of the plural wind turbines, depending for example on a geographical location, an IP address, and/or a proper function of the respective controller.

According to an embodiment of the present invention, the switching system is configured to initiate to execute the wind park control function by the second controller in case of an operation failure and/or a communication failure in the first controller and/or to initiate to execute the wind park control function by the first controller in case of an operation failure and/or a communication failure in the second controller.

Thus, the wind park control function may be only at a same time be executed by one of the first controller or the second controller.

Both, the first and second controller, must be functional and have proper communication capabilities to be either first or second controller. It is other rules that select initially which one is active and passive (backup). After that other rules dictates who will take over the role of the one of them that fails. If the passive fails then the active may continue to be active (to avoid control-delay). If the active fails then the passive will become active and a new passive may be chosen.

Initiating to execute the wind park control function may involve loading respective wind park control software into a processor and start executing this software. Furthermore, for initiation, communication signals may be received from for example a utility grid operator regarding demanded references for active power, reactive power, voltage, power factor and so on.

The operation failure and/or communication failure may for example be detected by the arrangement or the switching system by running one or more diagnosis tests. Furthermore, any operational parameters of the first controller and the second controller may be monitored, for example regarding temperature, humidity and so on, in case one or more of the operational parameters approaches or exceeds operational thresholds, the wind park control function may be switched to be provided by another controller which is not exceeding its operational parameters. Thereby, switching the wind park control function from the first to the second controller or vice versa may reliably be performed.

According to an embodiment of the present invention, the switching system is configured to employ the first controller or the second controller for the wind park control function based on at least one of (but not limited to): a detection of respective power at the respective controller; a geographical location of the respective controller; a network address of the respective controller, wherein a failure of the first controller is in particular detected by running a diagnosis test.

Wherein respective power at the respective controller is detected, it may be concluded that the controller is functional. To conclude that the controller is functional, furthermore one or more test software routines may be executed and evaluated. The geographical location may for example be selected such that a delay of communication signals to the plural other wind turbines is relatively small. In other cases, the geographical location may be selected to be in a low risk area regarding fire and/or water faults. The network address may for example be implemented as an IP address. The above listed criteria may be considered separately or in any combination. Thus, a high flexibility for selecting a new controller for wind park control is provided while ensuring that a continuous operation of the entire wind park is enabled.

According to an embodiment of the present invention, the arrangement further comprises a communication network communicatively connecting the first controller and the second controller with the plural wind turbines of the wind park; and/or wherein the at least one wind park control function involves sending control signals, in particular wind turbine references, to the plural wind turbines, wherein the sending the control signals is in particular performed using unicast or multicast or broadcast or any other means of communication.

The communication network may be a wire based or wireless communication network. The communication network may for example employ the UDP or MODBUS protocol. The control signals may be optical and/or electrical and/or radio signals. The wind turbine references may for example relate to demanded values of power output by the individual wind turbines. The unicast protocol may involve to establish a point to point connection and send the respective control signal to a desired wind turbine. Multicast may involve broadcasting control signals substantially to all wind turbines, wherein the respective wind turbines detect the control signals directed to them by reading out destination addresses. Thereby, high flexibility is provided for implementing the wind park control function and reliably controlling the plural wind turbines.

According to an embodiment of the present invention, when the first controller or the second controller is selected to provide the wind park control function, the first controller or the second controller, respectively, receives at least one input signal from a utility grid operator, in particular regarding at least one wind park reference, defining demanded active power and/or reactive power and/or voltage and/or current and/or power factor, and/or the first controller or the second controller, respectively, receives measuring values regarding electrical properties at a connection node to which the plural wind turbines are connected, as measured by a central measurement system.

The utility grid operator may be responsible for operating the utility grid to which the wind farm is connected. The utility grid operator may demand a particular wind park reference thereby requesting from the wind park particular power output which may be defined regarding the active power, reactive power, voltage, current and power factor for example. The grid operator may demand other operational restrictions, such as noise control or others. The grid operator may either itself provide measurement values regarding electrical properties at the connection node or a particular (e.g. central) measurement system may be provided which may be separate from the grid operator.

The central measurement system may be arranged to measure values regarding the electrical properties at the connection node, such as a point of common coupling to which all plural wind turbines of the wind park are connected. The wind turbines each may comprise a generator, a converter and a wind turbine transformer. At the high voltage side of the wind park transformer, the wind turbines may be connected to the point of common coupling. Thus, at the point of common coupling, the cumulated power output of all wind turbines may be collected. The point of common coupling may be connected to the utility grid via one or more wind park transformers and via a high voltage transmission line.

The central measurement system or the grid operator may provide values of the electrical properties at the point of common coupling or for example also at a high voltage side of the wind park transformer. When the measurement values regarding the electrical properties are considered by the first controller or the second controller acting to provide the at least one wind park control function, control of the wind park may be improved. In particular, the control of the wind park as performed by the first controller or the second controller may be performed such that the collective power output of the wind turbines meets the wind park reference as defined or supplied by the grid operator.

According to an embodiment of the present invention, the at least one wind park control function includes a reference selection function, involving to select wind turbine references for the plural wind turbines based on the wind park reference.

The reference selection function may be regarded as a rudimentary wind park control functionality or function. This reference selection function may be providing respective wind turbine references based at least on the wind park reference and further based on the measurement values regarding the electrical properties at the connection node, in particular. Thereby, operational parameters of all the plural wind turbines or states of the plural wind turbines may be considered for appropriate wind turbine reference selection. For example, capabilities of the different wind turbines may be considered.

Thereby, no expensive or exhaustive calculation capabilities are required by the first controller or the second controller, since the reference selection function merely may involve a selection of references without requiring to actually calculate the references by complex algorithms. This embodiment thus may also be performable when the first controller or the second controller are implemented in a relatively simple manner.

According to an embodiment of the present invention, each wind turbine is equipped with a distributed control (e.g. does not obtain status from any other wind turbines) each being capable to control its own power production based on the wind park reference and its own operation parameters and/or status.

The distributed control may be considered as a control where the wind park control is in a sense distributed among the plural wind turbines. However, each wind turbine nevertheless has the functionality to control its own power production based on the wind park reference and its own operational parameters and/or status and/or further based on for example the measurement values regarding electrical properties at the common connection node. When the wind park control is in a sense distributed among the plural wind turbines, failure in one or more of the wind turbines controllers may not lead to a shutdown of the entire wind park. The distributed control may for example also involve the reference selection function such that each controller of each wind turbine is capable of selecting a reference for its own power production.

According to an embodiment of the present invention, the at least one wind park control function includes a reference determination function, involving to determine wind turbine references for the plural wind turbines based on the wind park reference. The reference determination function is a more complex function compared to the reference selection function. Based on for example the wind park reference, the measurement values of the electrical properties at the connection node and further in particular based on the own operational parameters of the wind turbine, the first controller or the second controller may calculate wind turbine references for all other wind turbines in the wind park. Thereby, for example, an optimization may be performed, when also particularities of all plural wind turbines are considered, for example regarding capability, operation time and so on. The reference determination function may have been conventionally performed by a wind park controller installed at a central control location.

According to an embodiment of the present invention, the at least one wind park control function includes receiving operation parameters and/or status of the plural wind turbines and to determine the wind turbine references for the plural wind turbines further based on the operation parameters and/or the status. When the operation parameters and status of the plural wind turbines are received and considered for determining the wind turbine references, the control may be improved and it may be ensured that the plural wind turbines are not excessively be loaded and can comply with the wind turbine references over a prolonged time range without the risk of damage.

According to an embodiment of the present invention, the wind turbine references include at least one of the following for each of the plural wind turbines: a wind turbine active power reference; a wind turbine reactive power reference; a wind turbine voltage reference; a wind turbine power factor reference.

When one or more of the above listed electrical quantities are defined within the wind turbine references, the operation of the wind turbine may accurately be defined. Thereby, the collective power output at the common connection node may comply with the for example wind park reference in an improved manner.

According to an embodiment of the present invention, the at least one wind park control function includes all functions for controlling the wind park and/or wherein the first controller and/or second controller is implemented using a wind turbine controller hardware and running additional wind park control software and/or wherein the first and/or second controller is installed in a nacelle of the first and/or second wind turbine, respectively.

When the wind park control function includes all functions for controlling the wind park, this functionality may be provided by any of the controllers of any of the wind turbines, at least may be provided by the first controller or the second controller. Thus, the entire wind park may be controlled by the first controller or the second controller or for example also in particular any other controller of any other wind turbine. Thereby, redundancy may be improved and any required wind park control may be performed in a reliable manner.

When the wind turbine controller hardware is utilized for implementing the first controller and/or the second controller, costs may be reduced. When the first and/or second controller is installed in the nacelle or a wind turbine tower of the first or the second wind turbine, no particular control building may be required as has been utilized for a conventional wind park controller.

According to an embodiment it is provided a wind park, including plural wind turbines; and an arrangement according to one of the preceding embodiments, the plural wind turbines including the first wind turbine and the second wind turbine. The plural wind turbines may be communicatively connected via the communication network.

It should be understood, that features, individually or in any combination, disclosed, explained, provided or applied for an arrangement of controlling a wind park having plural wind turbines may also, individually or in any combination, applicable to a method of controlling a wind park having plural wind turbines according to embodiments of the present invention and vice versa.

According to an embodiment of the present invention it is provided a method of controlling a wind park having plural wind turbines, the method comprising controlling a first wind turbine and further executing at least one wind park control function by a first controller of the first wind turbine; then, in particular in case of a failure: switching from the first controller to a second controller of a second wind turbine to provide the at least one wind park control function by the second controller; and controlling the second wind turbine and further executing the at least one wind park control function by the second controller.

The method may for example be performed by the arrangement of controlling the wind park.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Embodiments of the present invention are now described with reference to the accompanying drawings. The invention is not restricted to the illustrated or described embodiments.
Fig. 1 schematically illustrates a wind park according to an embodiment of the present invention including an arrangement for controlling a wind park according to an embodiment of the present invention;
Fig. 2 schematically illustrates a wind park according to another embodiment of the present invention including an arrangement for controlling a wind park according to an embodiment of the present invention; and
Fig. 3 schematically illustrates a wind park according to still another embodiment of the present invention including an arrangement for controlling a wind park according to an embodiment of the present invention.

### Detailed Description

It should be noted that elements or structures in the different figures are labelled with reference signs differing only in the first digit. A description of one element or structure not described in detail with respect to a particular embodiment may be taken from the description of this respective element or structure in another embodiment.

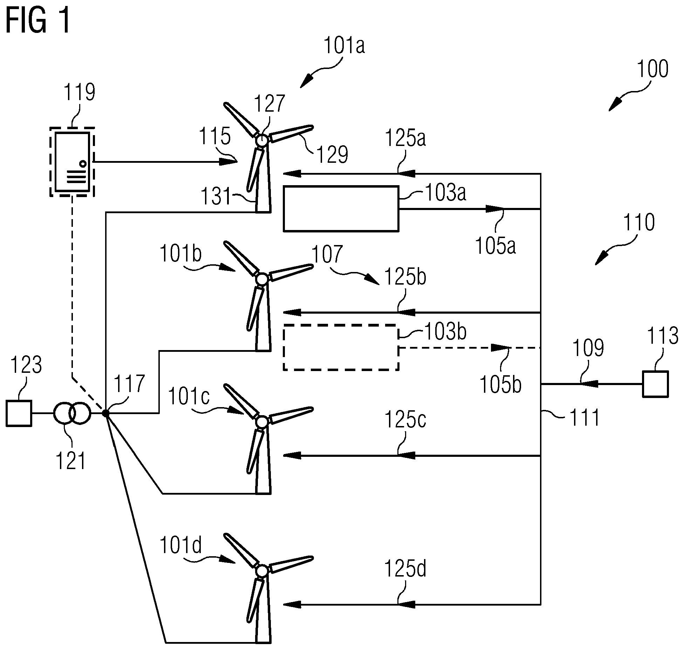

The wind park 100 schematically illustrated in **Fig. 1** includes plural wind turbines 101a,b,c,d and an arrangement 110 for controlling the wind park 100 according to an embodiment of the present invention. The arrangement 110 for controlling the wind park 100 comprises several components which are distributed across the plural wind turbines 101a,b,c,d and also comprises a communication network 111 communicatively connecting the plural wind turbines. The wind park 100 comprises a first wind turbine 101a and a second wind turbine 101b and further wind turbines 101c, 101d. The wind park 100 may for example comprise more than 2 or 10 or 300 or between 10 to 300 wind turbines, for example. The wind park 100 may be an onshore wind park or an offshore wind park. At the common connection node 117, the wind park 100 is connected via a wind park transformer 121 to a utility grid 123. Each of the wind turbines includes a rotor 127 at which plural rotor blades 129 are connected. The rotor 127 is harboured in a not in detail illustrated nacelle which is mounted on top of a wind turbine tower 131.

The first wind turbine 101a comprises a first controller 103a which is configured to control the first wind turbine 101a and which is further configured to provide at least one wind park control function. The wind park control function is symbolized with an arrow 105a representing control signals (e.g. 125a,b,c,d) to be communicated from the first controller 103a to the plural other wind turbines 101b, 101c, 101d and also to control wind turbine 101a.

The second wind turbine 101b comprises a second controller 103b which is also configured to control the second wind turbine 101b and further configured to provide the at least one wind park control function which is illustrated by a dashed line supplying control signals 105b. The arrangement 110 further includes a not in detail illustrated switching system 107 which is configured to selectively provide the at least one wind park control function (105a, 105b) by the first controller 103a or the second controller 103b.

In the situation as illustrated in Fig. 1, the at least one wind park control function is provided by the first controller 103a of the first wind turbine 101a. In the embodiment illustrated in Fig. 1, only the first wind turbine 101a and the second wind turbine 101b comprise the respective first controller and second controller 103a, 103b which are configured to provide at least the one wind park control function, but other wind turbines 101c, 101d do not comprise such a controller which is capable of providing at least one wind park control function. In other embodiments, more than two wind turbines and in particular all wind turbines of the wind park 100 may comprise a respective controller which is capable of providing the at least one wind park control function.

In the embodiment illustrated in Fig. 1, the second controller 103b is passive with respect to providing the wind park control function and the first controller 103a is active regarding providing the wind park control function. In case of a failure in the first controller 103a or within a communication via the network 111 to the other wind turbines, the switching system 107 may initiate to execute the wind park control function by the second controller. Thus, in a case of a failure in the first controller 103a, the second controller 103b provides the at least one wind park control function symbolized via the control signals 105b as issued and supplied by the second controller 103b to the plural other wind turbines.

Each of the controllers 103a, 103b are located at a particular geographical location and have a particular network address. The selection of which one of the controllers 103a, 103b is to be used to provide the wind park control function, may be based on the geographical location and/or the network address for example.

For example, via the communication network 111 or any other communication network, the first controller 103a or/and the second controller 103b may receive at least one input signal 109 from a utility grid operator 113, wherein the input signal 109 may define at least one wind park reference. Furthermore, the first controller and the second controller may receive measurement values 115 regarding electrical properties at a connection node 117 to which the plural wind turbines are connected. The measurement values 115 are for example measured by a central measurement system 119.

The first controller and the second controller 103a, 103b may be configured to provide a reference selection function, for example based on the wind park reference 109 and/or the measurement values 115 regarding properties at the common connection node 117.

The control signal 105a may for example represent wind turbine reference 125a, 125b to the first and second wind turbine 101a, 101b and further wind turbine references 125c, 125d to the other wind turbines 101c, 101d, respectively. In other embodiments, the first controller 103a and the second controller 103b may be configured to provide a reference determination function, involving to determine the wind turbine references 125b, 125a, 125c, 125d based on the wind park reference 109 and further in particular based on the measurement values 115. Furthermore, for selecting or determining the wind turbine references 125a,b,c,d, the respective controller 103a, 103b may consider the respective operation parameters and/or status of the individual wind turbines.

The respective controllers 103a, 103b of the wind turbines 101a, 101b may for example be installed within a not in detail illustrated nacelle or may be installed within the wind turbine tower or may be installed otherwise.

Embodiments of the present invention provide a wind park, wherein one or more wind turbine controllers hardware and/or software are configured to play the role as a park controller. Therein, the conventionally provided wind turbine controller may be utilized or employed as a wind park controller. The wind turbine controller or computer when playing the role as a wind park controller, can control both its own turbine and the entire wind park. In case of a failure, any other turbine, who has the capability to control a park, can be selected as the next wind park controller. The selection of the new wind park controller may be performed by an algorithm, for example based on a CPU power of the controller, based on a geographical location, based on the IP address, etc.

In Fig. 1, the first wind turbine is selected as the active park controller to control the entire wind park 100. The second wind turbine 101b is playing the role as a backup wind park controller. In case both the first wind turbine 101a and the second wind turbine 101b or their respective controllers 103a, 103b fail, any other of the other remaining wind turbines may be employed as providing the wind park control functionality. In Fig. 1, the active controller, namely the first controller 103a, is controlling the wind park using multicast in order to improve network communication efficiency.

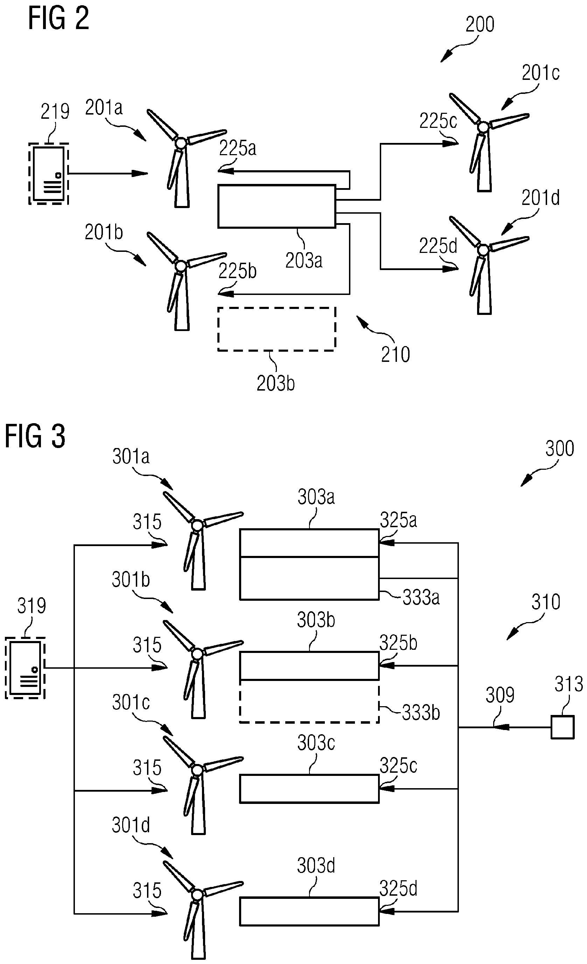

**Fig. 2** schematically illustrates a wind farm 200 according to another embodiment of the present invention. The embodiment of the wind park 200 illustrated in Fig. 2 has similarities to the embodiment illustrated in Fig. 1. In contrast to the embodiment as illustrated in Fig. 1, however, the communication in Fig. 2 is by using unicast instead of multicast. Thereby, a point to point communication may be provided. Still, the embodiment illustrated in Fig. 2 is a centralized architecture, where the selected wind turbine (first wind turbine 201a) takes all the effort to do the wind park control task utilizing its first controller 203a. When a wind park becomes large, the centralized park controller has to read more status from each wind turbine, meaning that it has to use more time to calculate set point and more time to send the set point to each wind turbine. The hardware shall also be powerful enough to run the functions. However, fast reaction time is a requirement for park control which is more difficult to reach when park becomes large. Therefore, reduction of the costs is always a demand.

**Fig. 3** schematically illustrates a wind park 300 according to still another embodiment of the present invention. The first wind turbine 301a comprises a first controller 303a which is set to be active to provide a reference selection function. The reference selection function 333a is illustrated as a portion of the controller 303a. The selected references 325b,c,d are supplied to the respective other wind turbines 301b, 301c, 301d.

Similar as is illustrated in Fig. 1, the wind parks 200, 300 illustrated in Figs. 2, 3 provide their collective power output at a not in detail illustrated common connection node and the respective controllers may receive reference values from a not illustrated utility operator, as is illustrated in Fig. 1.

In the embodiment illustrated in Fig. 3, the wind turbine controllers 303a, 303b, 303c, 303d all provide a distributed control functionality. Thereby, these distributed control functionalities do not obtain the status from all other wind turbines but may be capable to control their own power production based on the wind park reference 309 and possibly based on the measurement values 315 regarding electrical properties at the common connection node. Thus, to improve reaction time, instead of integrating all park control functions in one controller, some of the control functions are distributed across the functions into the different wind turbines. Each wind turbine in the wind park, without knowing information from each other, may then be capable to regulate production to reach the reference of the wind park. In this case, there is not a centralized controller providing the entire wind park control functionality that needs to read from all wind turbines for regulation, which would increase reaction time.

Furthermore, a reference selection and a grid measurement are common functions to all turbines in the park control system. Thus, these functions can be centralized onto one place in order to improve efficiency and to avoid to have all turbines repeat the same calculation with the same information. This part of the function may be located in any of the wind turbines and may be movable within the wind park. In case the controller that carries the function fails, any other wind turbine controller can be selected to run these functions. Thus, illustrated in Fig. 3 is a wind park wherein each wind turbine has a distributed control function implemented in its respective controller 303a, 303b, 303c, 303d. This function may receive the measurements 315 from the measurement system 319 and control the wind turbine to reach the target of the whole wind park. The distributed control function does not require the turbine to know information from each other. Instead, it may control the wind turbines based on their own status and park measurements and park references. The reference select function 333a,b,c,d may be placed as a centralized component in the park which provides information that is common for all turbines. In case the wind turbine for the active reference select function is failed, another wind turbine in the park may take over this functionality and responsibility.

Embodiments of the present invention may provide the following advantages individually or in any combination:
The redundancy of the control may be increased in the wind park at no extra wind park control server cost, since it uses available wind turbine controller hardware.

Embodiments remove the cost of a park controller and the corresponding redundancy hardware and facility. This may be meaningful at small site where cost is relatively sensitive.

Nowadays, the larger the wind park, the higher the consequence that there will be a loss of control. So it is sound to provide a high redundancy to ensure reliable park control, in order to reduce downtime of the entire wind park. A large wind park, when the park control is distributed, the system may have a shorter reaction time and it can do better realtime control. It may also have better scalability related to regulation and less network related to regulation.

From the network point of view, the movable wind park control architecture may be very flexible, because it may employ either unicast or multicast. If multicast is used, it may improve the efficiency of the network. In case multicast is not available in a park, e.g. it maybe not allowed or not possible, unicast can be used. When unicast is used, it does not add more network traffic than the traditional approach.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (110) for controlling a wind park (100) having plural wind turbines (101), the arrangement comprising:
a first wind turbine (101a) having a first controller (103a) that is configured to control the first wind turbine (101a) and further configured to provide at least one wind park control function (105a);
at least one second wind turbine (101b) having a second controller (103b) that is configured to control the second wind turbine and further configured to provide the at least one wind park control function (105b); and
a switching system (107) configured to selectively provide the at least one wind park control function by the first controller (103a) or by the second controller (103b).

2. Arrangement according to the preceding claim, wherein each of the plural wind turbines (101a,b,c,d) has a respective controller (103a,b,c,d) that is configured to control the respective wind turbine and further configured to provide the at least one wind park control function.

3. Arrangement according to one of the preceding claims, wherein the switching system (107) is configured:
to initiate to execute the wind park control function by the second controller (103b) in case of an operation failure and/or a communication failure in the first controller (103a) and/or
to initiate to execute the wind park control function by the first controller (103a) in case of an operation failure and/or a communication failure in the second controller (103b) .

4. Arrangement according to one of the preceding claims, wherein the switching system is configured to employ the first controller (103a) or the second controller (103b) for the wind park control function based on at least one of:
a detection of respective power at the respective controller;
a geographical location of the respective controller;
a network address of the respective controller,
wherein a failure of the first controller is in particular detected by running a diagnosis test.

5. Arrangement according to one of the preceding claims, further comprising:
a communication network (111) communicatively connecting the first controller and the second controller with the plural wind turbines of the wind park; and/or
wherein the at least one wind park control function involves sending control signals (105a,b), in particular wind turbine references, to the plural wind turbines,
wherein the sending the control signals is in particular performed using unicast or multicast or broadcast or any other means of communication.

6. Arrangement according to one of the preceding claims,
wherein when the first controller or the second controller is selected to provide the wind park control function,
the first controller (103a) or the second controller (103b), respectively, receives at least one input signal (109) from a utility grid operator (113), in particular regarding at least one wind park reference, defining demanded active power and/or reactive power and/or voltage and/or current and/or power factor, and/or
the first controller or the second controller, respectively, receives measuring values (115) regarding electrical properties at a connection node (117) to which the plural wind turbines are connected, as measured by a central measurement system (119).

7. Arrangement according to the preceding claim, wherein the at least one wind park control function includes a reference selection function (333a,b,c,d), involving to select wind turbine references for the plural wind turbines based on the wind park reference (309).

8. Arrangement according to one of the preceding claims, wherein each wind turbine is equipped with a distributed control (303a,b,c,d) each being capable to control its own power production based on the wind park reference and its own operation parameters and/or status.

9. Arrangement according to one of the preceding claims, wherein the at least one wind park control function includes a reference determination function, involving to determine wind turbine references (125a,b,c,d) for the plural wind turbines based on the wind park reference.

10. Arrangement according to one of the preceding claims, wherein the at least one wind park control function includes receiving operation parameters and/or status of the plural wind turbines and to determine the wind turbine references (125a,b,c,d) for the plural wind turbines further based on the operation parameters and/or the status.

11. Arrangement according to one of the preceding claims, wherein the wind turbine references (125a,b,c,d) include at least one of the following for each of the plural wind turbines:
a wind turbine active power reference;
a wind turbine reactive power reference;
a wind turbine voltage reference;
a wind turbine power factor reference.

12. Arrangement according to one of the preceding claims,
wherein the at least one wind park control function includes all functions for controlling the wind park (100).

13. Arrangement according to one of the preceding claims,
wherein the first controller (103a) and/or second controller (103b) is implemented using a wind turbine controller hardware and running additional wind park control software and/or
wherein the first and/or second controller is installed in a power unit, in particular nacelle, of the first and/or second wind turbine, respectively.

14. Wind park (100), including:
plural wind turbines (101a,b,c,d); and
an arrangement (100) according to one of the preceding claims, the plural wind turbines including the first wind turbine and the second wind turbine.

15. Method of controlling a wind park (100) having plural wind turbines (101a,b,c,d), the method comprising:
controlling a first wind turbine (101a) and further executing at least one wind park control function by a first controller (103a) of the first wind turbine;
then, in particular in case of a failure:
selecting a second controller (103b) of a second wind turbine (101b) among the plural wind turbines of the wind park;
switching from the first controller (103a) to the second controller (103b) to provide the at least one wind park control function by the second controller; and
controlling the second wind turbine (101b) and further executing the at least one wind park control function by the second controller (103b).
